# EUROPÄISCHE PATENTANMELDUNG

(11) **EP 4 474 435 A1**
(43) Veröffentlichungstag der Anmeldung: **11.12.2024**
(21) Anmeldenummer: 24177311.8
(22) Anmeldetag: 22.05.2024
(51) Int. Cl.: C09D 5/00

(54) **LACKFORMULIERUNG, ISOLATION DARAUS UND VERWENDUNG DAZU**

(30) Priorität: 05.06.2023 DE 102023205219
(71) Anmelder: Siemens Aktiengesellschaft, 80333 München (DE); Siemens Mobility GmbH, 81739 München (DE)
(72) Erfinder: Lang, Steffen, 91352 Hallerndorf (DE); Maleika, Marek, 90766 Fürth (DE); Müller, Niels, 91166 Georgensgmünd (DE); Schemmel, Florian, 90455 Nürnberg (DE)
(74) Vertreter: Siemens Patent Attorneys

(57) **Zusammenfassung**

Die Erfindung betrifft allgemein das Gebiet der Isolierung, insbesondere eine Lackformulierung für eine Hochtemperatur-Isolierung bei maximalen Betriebstemperaturen von bis zu 200°C und mehr. Durch die vorliegende Erfindung wird erstmals eine Isolation vorgeschlagen, bei der mit reduziertem oder ohne Glimmeranteil eine hohe Teilentladungsresistenz und hohe Biegefestigkeit erreicht wird. Zudem wird eine Senkung der elektrischen Verluste erzielt. Dies alles mit sehr einfachen Applikations- und/oder Herstellungsmethoden der Isolation, respektive der Beschichtung aus einem Nasslack oder Pulverlack. Dazu wird dem Tränkharz einer kommerziellen Isolation ein Anteil an Thermoplast und ein Anteil an Siloxanmodifiziertem Harz zugegeben. Die beiden Komponenten bewirken im Zusammenspiel mit den herkömmlichen duromeren Tränkharzen, beispielsweise auf Epoxidbasis, die oben genannten technischen Verbesserungen.

## Beschreibung

Die Erfindung betrifft allgemein das Gebiet der Isolierung, insbesondere eine aus einer Lackformulierung hergestellte Isolation und deren Verwendung in einer elektrischen Maschine, die bei maximalen Betriebstemperaturen von bis zu 200°C und mehr betrieben wird.

Eine Lackformulierung dient zur Herstellung eines Lacks durch Applikation entweder als Pulverlack oder als Nasslack. Der fertig gehärtete Lack dient als Isolation und/oder als isolierende Beschichtung elektrischer Leiter. So betrifft die Erfindung einen Lack der zumindest Teil einer Isolation für eine elektrische Maschine, insbesondere eine rotierende elektrische Maschine mit Stator, ist. Als elektrische rotierende Maschine kommen Elektromotor und/oder Generator mit verbesserter Temperaturbeständigkeit der polymeren Isolations-Bestandteile in Betracht. Ebenso betrifft die Erfindung eine Lackformulierung für einen Lack als isolierende Beschichtung, insbesondere eine isolierende Beschichtung von - beispielsweise - in einem additiven Verfahren hergestellten elektrischen Leiter, von Stromschienen und/oder von Anschlussschienen und/oder zur isolierenden Beschichtung von Klemmkästen.

Elektrische Maschinen für Antriebssysteme allgemein sind mit Stator, wie bei Motoren und Generatoren des Mittel- und Hochspannungsbereichs, ausgestattet und umfassen elektrische Leiter, Hauptisolation, Leiterisolierung, wie Drahtisolierung mit Teilleiterisolation, und ein Ständerblechpaket. Die Hauptisolation dient dem Zweck, die Phasen gegeneinander, gegen das geerdete Ständerblechpaket und gegen die Umgebung elektrisch zu isolieren.

Die Leiterisolierung isoliert die Leiter einer Spule, insbesondere einer Spule, gegeneinander. Elektrische Maschinen werden auch bei höchstmöglichen Stromdichten betrieben. Traktionsmotoren kommen dann auf hohe Temperaturen, so dass die - Wärmeklasse der polymerbasierten Kunststoffe der Isolationen Betriebstemperaturen bis zu 220°C standhalten sollten. Die Kunststoffe, die für diesen Zweck in Frage kommen, sind auf wenige Polymersorten begrenzt. Die Polymerart der Isolationen für Traktionsmotoren begrenzt sich aufgrund unterschiedlichster Anforderungen bislang im Wesentlichen auf mAramid und Polyimid. Die Drahtisolationen bestehen aus PEEK, PI, PAI, PPS, PEI, Polyesterimid (Duromer), und ähnliche. Hier sind vor allem duromere Drahtlacke aus der Literatur bekannt, die hinsichtlich der TE-Resistenz optimiert wurden, so z.B. modifiziertes PAI - Voltatex 8534 oder modifiziertes Polyesterimid - Voltatex 7740. Tränkharz für glimmerbasierte feste Isolationswerkstoffe besteht in der Regel aus Duromer, üblicherweise aus Polyesterimid oder Silikon bei Traktionsmotoren - wegen der hohe Wärmeklasse - und/oder Epoxid bei industriellen Hochspannungsmotoren.

Bei Niederspannungsmotoren kann auch Polyester eingesetzt werden. Bis auf TE-Resistenz optimierte VPI-Harze mit Nanopartikeln, die aber nicht in der Serienfertigung eingesetzt werden, sind keine TE-optimierten Harze in der Serienproduktion von Motoren bekannt.

Die meisten polymeren Isolationsbestandteile, außer bestimmte Drahtlacke, sind nur gering oder gar nicht resistent gegenüber elektrischen Entladungen. Vor allem die thermoplastischen Bestandteile sind nicht TE-resistent.

Bei extrudierten Leiterisolationen bzw. bei umsponnenen, bandförmigen Leiterisolationen - weniger bei den Lösungsmittel-haltigen Drahtlacken dafür - werden herkömmlich PEEK, PI, PAI, PPS, PEI, Polyesterimid als Duromer und ähnliche eingesetzt. Vor allem sind duromere Drahtlacke für die Leiterisolation handelsüblich, die hinsichtlich der TE-Resistenz optimiert wurden.

In Hochspannungsmotoren, wie Traktionsmotoren und/oder großen Industriemotoren wird die TE-Resistenz der Isolation durch die Zugabe von Schichtsilikaten, insbesondere Glimmer, erhöht. Dazu wird der Glimmer in Form von Papieren bei Flächenisolierstoffen in Form von Laminaten, das heißt das Glimmerpapier wird auf Trägerfolien oder Trägergeweben bzw. Trägerfilzen, wie Nomex^{®} aufgebracht, um es in seiner mechanischen Festigkeit zu verbessern und um das Glimmerpapier besser verarbeiten zu können. Bei Glimmerbändern wird das Papier mit einem Glasgewebeträger oder einer PET oder PI - Folie verbunden und in schmale Rollen geschnitten, die dann um die Spule gewickelt werden. Auch bei Teilleiterisolationen wird Glimmer in Form eines Prepregs um die Teilleiter gewickelt und so die TE-Reisstenz der Teilleiterisolation verbessert. Grundsätzlich werden alle diese Glimmerlaminate nach der Applikation mit einem Tränkharz - in der Regel ein duromeres Harz - imprägniert und verfestigt.

Nachteilig an den Glimmerlaminaten ist zum einen deren beschränkte Biegefestigkeit, was insbesondere bei Wickelbandisolationen nachteilig ist, zum anderen das natürliche Vorkommen in Indien und Madagaskar, das bezüglich Lieferkette und Nachhaltigkeit bedenklich erscheint.

Die "Hairpin-Technologie" ist eine Wickeltechnologie für Statoren in elektrischen Motoren und Generatoren, die eine Untergruppe der Wellenwicklungen darstellt. Sie findet insbesondere bei Traktionsmotoren für Elektrofahrzeuge Anwendung. In Abgrenzung zur Formspulenwicklungs-Technologie basiert die Wellenwicklungs-Technologie auf Drahtwindungen, welche einzeln und nicht als Spulen kombiniert in die Statornuten des Blechpakets eingefügt werden. Diese Steckspulen, so genannte Hairpins, gewellte Hairpins "Continuous Hairpin" und/oder I-Pins sind wellenförmig, U- respektive I-förmig gebogene lackierte und/oder extrudierte Kupferflachdrähte.

I-Pins sind beispielsweise geradlinig geformte Kupferflachdrähte, bei dem Konzept der Wellenwicklung "Continuous Hairpin" werden so genannte Wickelmatten hergestellt und anschließend von innen in das Blechpaket eingeführt. Im Vergleich zur U- und I-Pin-Technologie hat das einen deutlich geringeren Aufwand in der Verbindungstechnik der einzelnen Pins.

Der Aufbau eines Hairpin-Stators unterscheidet sich zu herkömmlichen Statoren lediglich in der Art des Wicklungssystems - die weiteren Komponenten des Stators bleiben weitestgehend unverändert. Die Windungen in Form von isoliertem Wickeldraht wird im Hairpin-Stator durch Steckspulen realisiert.

Bei der Hairpin-Technologie, die eine moderne Technologie für Statoren in elektrischen Maschinen darstellt, werden neue, kostengünstigere Methoden ausprobiert. So wird der Kupferflachdraht mit typischer Hairpin-Geometrie in einem umformbasierten Montageverfahren in die Nuten des Blechpakets eingebracht. Dabei ist es jedoch unerlässlich, die gelöteten oder geschweißten Verbindungsstellen der einzelnen Hairpins untereinander mit einer Beschichtung zu isolieren, da diese nicht durch die Leiterisolierung geschützt sind. Die derzeit verwendeten Lacke sind jedoch in ihrer thermischen Beständigkeit auf eine Wärmeklasse 180(H) begrenzt.

Es besteht nach wie vor der Bedarf an einer verbesserten Technologie für eine Formulierung zur Herstellung einer Isolation und/oder einer isolierenden Beschichtung, insbesondere auch geeignet für die oben genannten Anwendungen - auch für den Einsatz in der Steckspulen- und/oder Wellenwicklungs-Technologie - beispielsweise einsetzbar z.B. bei Traktionsmotoren für Schienenfahrzeuge, Personenkraftwagen, Lastkraftwagen und/oder zur isolierenden Beschichtung, beispielsweise von Klemmkästen, additiv gefertigter Leiter und/oder Spulen, sowie Strom- oder Anschlussschienen.

Aufgabe der vorliegenden Erfindung ist daher, eine Lackformulierung für eine isolierende Beschichtung und/oder eine Isolation für eine elektrische rotierende Maschine, insbesondere zum Einsatz bei maximalen Wärmeklasse nach IEC 60085 von mehr als 155°C, insbesondere von 200°C und darüber, bevorzugt sogar von maximal 220°C und darüber, zu schaffen, das auch für den Einsatz bei der Steckspulen und/oder Wellenwicklungs-Technologie geeignet ist, wobei gleichzeitig der Anteil an Glimmer reduziert wird, ohne die Teilentladungsresistenz und/oder die Biegefestigkeit der Isolation zu erniedrigen.

Diese Aufgabe wird durch den Gegenstand der vorliegenden Erfindung, wie er in der Beschreibung, den Figuren und den Ansprüchen offenbart wird, gelöst.

Dementsprechend ist Gegenstand der vorliegenden Erfindung eine Lackformulierung für Nasslack oder Pulverlack, zumindest zwei polymerisierbare Kunststoffkomponenten A und B, von denen zumindest eine Siloxan-modifiziert ist, umfassend, wobei die Komponente **A** thermoplastisch ist und die Komponente **B** duromer ist. Außerdem ist Gegenstand der Erfindung die Verwendung der Lackformulierung zur Herstellung einer Isolation einer elektrischen rotierenden Maschine und ein Verfahren zur Applikation der Lackformulierung durch Sprühen oder im Wirbelbett.

Allgemeine Erkenntnis der Erfindung ist es, dass durch Siloxan-Modifikation und Thermoplast-Zugabe ein herkömmliches duromeres Tränkharz ohne festen Isolationswerkstoff wie ein Glimmerband gleiche oder noch gegenüber einer Wickel-Glimmerbandisolation mit Tränkharz verbesserte isolierende Eigenschaften zeigt und dabei nicht nur nachhaltiger ist, sondern sogar technisch überlegene und gleichzeitig wirtschaftlich günstigere Isolationen schafft.

Nach einer vorteilhaften Ausführungsform erfolgt die Siloxan-Modifikation durch Lösen und/oder Dispergieren der beiden unvernetzten Kunststoffkomponenten, Thermoplast und Duromer, von denen zumindest ein Partner Siloxan-Anteile umfasst, in einem Extruder vor der Herstellung der Lackformulierung.

Nach einer vorteilhaften Ausführungsform der Erfindung ist die aus der Lackformulierung hergestellte Isolation nicht nur mit weniger als 30 Vol%, bevorzugt weniger als 20Vol% und insbesondere bevorzugt weniger als 10 Vol% Glimmer, so-zusagen "glimmer-reduziert", sondern sogar Glimmer-frei, also weniger als 1Vol%, insbesondere weniger als 0,3Vol% Glimmer.

Dies hat vor allem auch einen positiven Effekt auf die Nachhaltigkeit, da Glimmer ein Naturprodukt ist, das unter anderem im Norden Indiens abgebaut wird. Nicht nur der weite Transportweg ist dabei nicht nachhaltig auch gesellschaftspolitisch ist der Abbau von Glimmer im Norden Indiens fragwürdig, weil die Abbau-Regionen Jharkhand und Bihar politisch instabil sind. Durch den Wegfall des Glimmers können die Lieferketten gesichert und der Lieferweg verkürzt und die Verfügbarkeit erhöht werden, wenn das synthetische Material in Deutschland oder Europa hergestellt wird.

Nach einer vorteilhaften Ausführungsform der Erfindung liegt in der Lackformulierung als Komponente **A** der Kunststoff in Form eines thermoplastischen Harzes vor, das beispielsweise eine oder mehrere Verbindungen, ausgewählt aus der Gruppe
Thermoplastisches Silikon
Siloxan-Polyetherimid-Copolymer
Polyetherimid - PEI-,
Polybenzimidazol -PBI-,
Polyamidimid -PAI-,
Polyetherketone wie z.B.
Polyetheretherketon -PEEK-,
Polyetherketonketon -PEKK-,
Poletherketonetherketonketon -PEKEKK-
Polyetherketon -PEK-,
Polymere Schwefelverbindungen, wie z.B.
Polysulfon -PSU-,
Polyphenylensulfid -PPS-,
Polyethersulfon -PES-,
Polyphenylensulfon -PPSU-
jeweils allein oder in beliebigen Mischungen, Blends und/oder Copolymeren vorliegend, umfasst.

Nach einer vorteilhaften Ausführungsform der Erfindung liegt in der Lackformulierung als Komponente **B** der Kunststoff in Form eines noch nicht vernetzten duromeren Harzes vor, das beispielsweise eine oder mehrere Verbindungen, ausgewählt aus der Gruppe Epoxidharz, Polyurethanharz, Polyisocyanatharz, Polyimidharz, Polyesterimidharz und/oder Polyesterharz in beliebigen Mischungen, Blends und/oder Copolymeren umfasst. Beispielsweise umfasst das duromere unvernetzte Kunstharz in der Formulierung Verbindungen wie Bisphenol-A-diglydidylether, Bisphenol-F-diglycidylether, Novolak, aliphatischem Epoxidharz und/oder aromatischem Epoxidharz. Die Lackformulierung kann Lösungsmittel-haltig als Nasslack vorliegen, dabei kann das Basisharz auch unter Normalbedingung flüssig vorliegen, beim Einsatz als Pulverlack ist es ein Pulver, also unter Normalbedingungen ein Feststoff.

Als "Normalbedingungen" - insbesondere hinsichtlich Verarbeitungsbedingungen und Lagerstabilität ein relevanter Gesichtspunkt - werden 25 °C Raumtemperatur, Umgebungsluft und Normaldruck bezeichnet.

Dazu ist in der Komponente **B** vorzugsweise, je nach Harz-Verbindungsklasse, korrespondierend, also in stöchiometrisch geeigneter Menge und chemisch passend zum duromeren Harz ein Härter enthalten, der beispielsweise auf Anhydrid-, Imidazolbasis, Bisphenol und/oder Dicyanamidbasis aufgebaut ist.

Als Nasslack liegt die Lackformulierung gelöst in Lösungsmittel vor. Als Lösungsmittel sind beispielsweise geeignet: Aceton, Isopropanol, Ethylester, Methylethylketon, Butylacetat in beliebigen Mischungen und/oder Kombinationen. Dem Nasslack ist weiterhin eventuell ein gängiges Thixotropiermittel beigemischt.

Unter Wirbelbettbeschichtung ist die Beschichtung eines Leiters im Wirbelbett, das mit Pulverlackformulierung gefüllt ist, zu verstehen. Dabei wird insbesondere ein Pulver aus - unter Normalbedingungen festen - Verbindungen eingesetzt, das heißt bevorzugt wird dabei, sowohl die Komponente A als auch Komponente B sowie der Härter und die Siloxan-haltige Verbindung, die Teil der Komponente **A** und/oder der Komponente **B** sein kann, fest vorliegen.

Pulverbeschichtung, insbesondere elektrostatische Pulverbeschichtung - erfolgt z.B. durch Sprühen und/oder im Wirbelbettverfahren. Dabei wird ein Pulver aus Feststoffen eingesetzt, am besten so, dass alle Komponenten der Lackformulierung bei Normalbedingungen als Feststoff vorliegen.

Nasslackierung erfolgt z.B. durch Lackieren, Bepinseln, Tauchen, Besprühen, Spin Coating und/oder Tauchverfahren. Die Formulierung wird dabei in einem Lösungsmittel gelöst auf den Leiter aufgebracht, das Lösungsmittel wird dann - zumindest zum Teil - entfernt und die Formulierung gehärtet. Dazu kann das Basisharz als Feststoff und/oder als Flüssigkeit vorliegen.

Nach einer weiteren vorteilhaften Ausführungsform der Erfindung können in der Lackformulierung ein oder mehrere Additive und/oder Füllstoffe enthalten sein. Beispielsweise können Additive zur Verbesserung der Verarbeitbarkeit enthalten sein.

Andererseits oder ergänzend können Additive zur Erhöhung der Stabilität einer durch Lackieren mit einer Lackformulierung gemäß der Erfindung und anschließende Aushärtung erhältliche Isolation enthalten sein. Beispielsweise können ein oder mehrere Metalloxid(e), wie z.B. TiO₂ und/oder solche mit einer der folgenden Summenformeln Na₈Al₆Si₆O₂₄S₄ und/oder Na₆Al₆SiₑO₂₄S₂. Weitere Additive können Fe₂O₃ und/oder MnFe₂O₄ und/oder elektrisch nichtleitfähige Kohlenstoff basierte Füllstoffe, wie z.B. Industrieruß sein. Bei Bedarf können die Additiv-Partikel teilweise oder ganz, vollflächig oder teilflächig, mit einer SiO₂-Beschichtung ausgestattet vorliegen.

Diese Additive sind insbesondere auch oxidationshemmend, so dass die Wärmeklasse und/oder der Temperatur-Index einer damit hergestellten Isolation weiter erhöht wird.

Additive werden beispielsweise bei der Herstellung der Lackformulierung zugemischt. Weitere Additive, Verlaufshilfsmittel, Farbpigmente, Quarzpartikel, Quarzgut, Quarzmehl und/oder Glas und weiteres können der Lackformulierung zugemischt werden.

Der Anteil an Additiv und/oder Füllstoff in der fertigen Lackbeschichtung liegt beispielsweise im Bereich zwischen 0,05 und 10 Gew%, insbesondere im Bereich zwischen 0,05 und 2 Gew% und besonders bevorzugt im Bereich zwischen 0,1 und 1 Gew%.

In 100% reiner Lackformulierung ohne Lösungsmittel liegt die Komponente **A** im Bereich von 3 Gew% bis 97 Gew%, insbesondere von 5Gew% bis 95Gew%, besonders bevorzugt im Bereich 20Gew% bis 80 Gew% vor.

Vorzugsweise wird die Isolation durch ein oder mehrmaliges Lackieren des Leiters mit einer Lackformulierung gemäß einem Ausführungsbeispiel der vorliegenden Erfindung erhalten.

Die Schichtdicke einer fertigen Isolation liegt beispielsweise - je nach Bemessungsspannung des Motors und/oder nach elektrischem Leiter im Bereich von 1µm bis 5 mm, insbesondere 70pm bis 3mm und insbesondere bevorzugt 200pm bis 1,2mm.

In 100% reiner Lackformulierung ohne Lösungsmittel liegt die Komponente **B**

Nach einer vorteilhaften Ausführungsform liegt der atomare Anteil an Silizium-Atomen in der Lackformulierung im Bereich von 0,01 bis 25 %, insbesondere von 0,1% bis 20%.

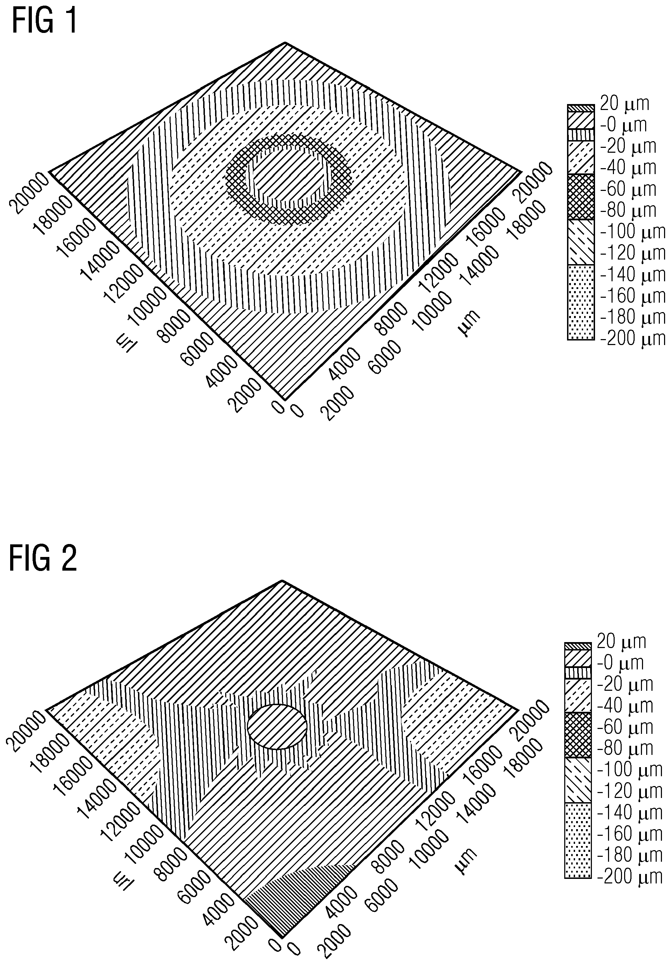

Figuren 1 und 2 zeigen die Oberflächen zweier Testkörper, die genau den gleichen Bedingungen für die gleiche Zeit ausgesetzt waren, wobei Figur 1 einen Testkörper mit einer Beschichtung nach dem Stand der Technik - 100% Epoxid- und Figur 2 einen Testkörper mit einer Beschichtung nach einem Ausführungsbeispiel der vorliegenden Erfindung aus 40% Siloxan-modifiziertem Thermoplasten und 60% Epoxidharz zeigt.

Figur 1 zeigt den Stand der Technik die Oberfläche eines Testkörpers, der mit nicht-Siloxan-modifiziertem Duromer - 100% Epoxidharz - beschichtet und 100 Stunden bei 10kV und relative Luftfeuchtigkeit 50% bei 22°C ausgesetzt war und Figur 2 zeigt im Vergleich dazu den gleichen Versuchsaufbau mit dem gleichen Duromer als Komponente **B** und einem Siloxanmodifizierten Thermoplasten als Komponente **A** zu 40% beigemischt.

Im Vergleich der beiden Figuren 1 und 2 ist zu erkennen, dass beim Stand der Technik die Oberfläche bis zu 50pm bis 70µm tief - siehe den Strahlungsring in rot -erodiert ist, wohingegen beim Ausführungsbeispiel der Erfindung wie in Figur 2 gezeigt, eine Erosionstiefe der Oberfläche im Bereich von nur 10pm bis 30µm zu beobachten ist.

Diese einfache Laboruntersuchung - Figuren 1 und 2 - kann ganz klar den Einfluss der Siloxan-Modifikation auf die Teilentladungsresistenz der Lackformulierung zeigen.

Die Biegebeanspruchung entspricht einer der häufigsten, in der Praxis auftretenden Beanspruchungsarten bei Isolationen von elektrischen rotierenden Maschinen und besitzt deshalb eine große Bedeutung für die Kennwertermittlung an Kunststoffen und Verbundwerkstoffen für elektrischen Isolationen von rotierenden Maschinen. Schon durch Zugabe von z.B. 5 gew.% PEI/Siloxan Thermoplast zu einem Epoxidharzformulierung wird der Biegemodul bei RT von 5,8 auf 5,2 GPa reduziert, was einer Erhöhung der Biegebeanspruchung mit sich bringt.

Die meisten technisch genutzten amorphen und teilkristallinen Kunststoffe sind elektrische Isolatoren, weshalb diese häufig für Hauptisolation von Spulen in drehenden Maschinen eingesetzt werden. Die elektrischen bzw. dielektrischen Eigenschaften werden dabei maßgeblich durch die chemische Struktur und die verarbeitungsbedingte Morphologie sowie eingesetzte Füll- und Verstärkungsstoffe bestimmt. Durch ein elektrisches Feld wirken in einem Kunststoff (Dielektrikum) Kräfte, welche die molekulare Elektrostatik beeinflussen und die zu einer Ladungsverschiebung zwischen angrenzenden Potentialflächen führen. Damit ist eine Polarisation des Dielektrikums verbunden, die eine wesentliche Eigenschaft des Kunststoffes darstellt. Beim Anlegen eines Wechselfeldes entsteht aufgrund der Phasenverschiebung zwischen dem ohmschen Widerstand und dem kapazitiven Widerstand ein Verlust an elektrischer Energie, der in Wärme umgesetzt wird.

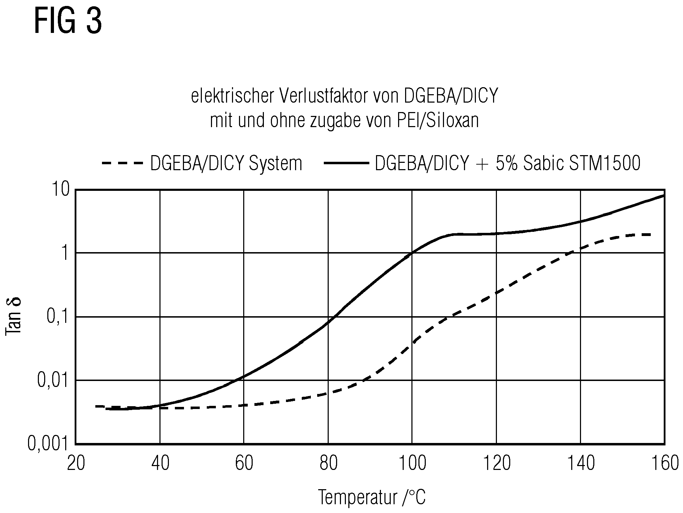

Die dielektrischen Eigenschaften eines Isolators werden vor allem durch die Kenngrößen Dielektrizitätszahl εᵣ (auch als relative Dielektrizitätskonstante oder Permittivität bezeichnet) und den dielektrischen Verlustfaktor tan δ dargestellt. Je niedrige der Wert von tan δ in dem Temperaturverlauf bei einem Isolator gemessen wird desto weniger werden die elektrischen Verluste entstehen. Bei den Laborversuchen mit oben beschriebene Blend/Mischung zeigten das schon der Zusatz von 5 % STM1500 zum Tränkharz - Komponente **B** einem Epoxidharz DGEBA/DICY eine Senkung des tan δ bei 100°C von 1 auf 0,04 bewirkt -siehe Figur 3-.

Figur 3 zeigt die Senkung des elektrischen Verlustfaktors durch Zugabe von 5Gew% eines Siloxan-Polyetherimid-Copolymers zu einem Epoxidharz, wieder einem DGEBA/DICY Gemisch.

Zu erkennen ist in Figur 3, wie die duromere Komponente B durch die Zugabe und/oder Zumischung von thermoplastischen Polymere wie z.B. einer Mischung aus thermoplastischem Polyimid und einem Siloxan-Polyetherimid-Copolymer, Siltem^{®} eine ausreichende Teilentladungsresistenz erreicht wird und gleichzeitig auch noch sehr gute mechanische und elektrische Eigenschaften - zu erkennen durch den moderaten Anstieg des tan δ bei Erhöhung der Temperatur - beibehalten werden. Auch die thermische Beständigkeit, der Temperaturindex wird sichtbar durch die Zugabe eines Thermoplasten und die Siloxan-Modifikation erhöht.

Des Weiteren können alle relevanten Glimmerkomponenten in den jeweiligen Isolationssystemen mit dem vorgeschlagenen Blend/Mischung ersetzt werden. Zudem ist das Isolationssystem nahezu Halogenfrei, da die Herstellung der einzelnen Verbindungen, die zusammen die Formulierung ergeben, Großteils ohne Einsatz von Halogenhaltigen Verbindungen erfolgen kann.

Die Herstellung von elektrischen Isolationen aus der Lackformulierung ist - je nachdem ob es sich um Nasslack oder Pulverlack handelt - durch einen automatischen Prozess des Besprühens und/oder z.B. im Wirbelbettverfahren und/oder Pulverbeschichtung sehr kostengünstig und einfach. Grundsätzlich können die Biegeradien der genannten thermoplastisch/duromere Isolation enger als die einer glimmerhaltigen Isolation gewählt werden, da die Materialdehnungen einer durch ein Ausführungsbeispiel eines Lacks nach der vorliegenden Erfindung hergestellten Isolation deutlich höher sind. Daraus können konstruktive Vorteile entstehen. Vorher wurde diese durch Glimmerbandbewicklung der Spule und anschließendem Tränkprozess und wiederum anschließenden Aushärteprozess aufwändig = teuer hergestellt.

Werden der Blend/Mischung als Hauptisolation in automatischen Verfahren hergestellt, so kann auch in dem gleichem Prozess die AGS, EGS und ein sogenannter Nutkleber, wie in der DE 10 2021 201 666.9 beschrieben, einfach hergestellt werden.

Durch die vorliegende Erfindung wird erstmals eine Isolation vorgeschlagen, bei der mit reduziertem oder ohne Glimmeranteil eine hohe Teilentladungsresistenz und hohe Biegefestigkeit erreicht wird. Zudem wird eine Senkung der elektrischen Verluste erzielt. Dies alles mit sehr einfachen Applikations- und/oder Herstellungsmethoden der Isolation, respektive der Beschichtung aus einem Nasslack oder Pulverlack. Dazu wird dem Tränkharz einer kommerziellen Isolation ein Anteil an Thermoplast und ein Anteil an Siloxan-modifiziertem Harz zugegeben. Die beiden Komponenten bewirken im Zusammenspiel mit den herkömmlichen duromeren Tränkharzen, beispielsweise auf Epoxidbasis, die oben genannten technischen Verbesserungen.

## Patentansprüche

1. Lackformulierung, zumindest zwei polymerisierbare Kunststoffkomponenten **A** und **B**, von denen zumindest eine Siloxan-modifiziert ist, umfassend, wobei die Komponente **A** thermoplastisch ist und die Komponente **B** duromer ist.

2. Lackformulierung nach Anspruch 1, die Lösungsmittel-haltig ist.

3. Lackformulierung nach Anspruch 1 oder 2, die als Nasslackformulierung vorliegt.

4. Lackformulierung nach Anspruch 1, die als Pulver vorliegt.

5. Lackformulierung nach einem der vorhergehenden Ansprüche, wobei die Komponente **A** einen Thermoplasten, eine Verbindung ausgewählt aus der Gruppe folgender Verbindungsklassen:
Thermoplastisches Silikon
Siloxan-Polyetherimid-Copolymer
Polyetherimid - PEI-,
Polybenzimidazol -PBI-,
Polyamidimid -PAI-,
Polyetherketone wie z.B.
Polyetheretherketon -PEEK-,
Polyetherketonketon -PEKK-,
Poletherketonetherketonketon -PEKEKK-
Polyetherketon -PEK-,
Polymere Schwefelverbindungen, wie z.B.
Polysulfon -PSU-,
Polyphenylensulfid -PPS-,
Polyethersulfon -PES-,
Polyphenylensulfon -PPSU-
jeweils allein und/oder in beliebigen Mischungen, Blends und/oder Copolymeren vorliegend, umfasst.

6. Lackformulierung nach einem der vorhergehenden Ansprüche, wobei die Komponente **B** einen Thermoplasten, eine Verbindung ausgewählt aus der Gruppe folgender Verbindungsklassen:
Epoxidharz,
Polyurethanharz,
Polyisocyanatharz,
Polyimidharz,
Polyesterimidharz und/oder
Polyesterharz
jeweils allein und/oder in beliebigen Mischungen, Blends und/oder Copolymeren vorliegend, umfasst.

7. Lackformulierung nach einem der vorhergehenden Ansprüche, bei dem die Komponente **A** Siloxan-haltig ist.

8. Lackformulierung nach einem der vorhergehenden Ansprüche, bei dem die Komponente **B** Siloxan-haltig ist.

9. Lackformulierung nach einem der vorhergehenden Ansprüche, bei dem die Komponente **A** in einem mengenmäßigen Anteil von 1Gew% bis 95Gew% in der lösungsmittelfreien Lackformulierung enthalten ist.

10. Lackformulierung nach einem der vorhergehenden Ansprüche, bei dem die Komponente **B** in einem mengenmäßigen Anteil von 5Gew% bis 99Gew% in der lösungsmittelfreien Lackformulierung enthalten ist.

11. Isolation eines Leiters in einer elektrischen rotierenden Maschine herstellbar durch Lackieren des Leiters mit einer Lackformulierung nach einem der Ansprüche 1 bis 10.

12. Isolation nach Anspruch 11, die durch mehrmaliges Lackieren herstellbar ist.

13. Isolation nach einem der Ansprüche 11 oder 12, die durch Besprühen herstellbar ist.

14. Isolation nach einem der Ansprüche 11 oder 12, die durch Pulverbeschichtung und/oder im Wirbelbettverfahren herstellbar ist.

15. Verwendung der Lackformulierung nach einem der Ansprüche 1 bis 10 zur Herstellung einer Isolation einer elektrischen rotierenden Maschine.
